# EUROPÄISCHE PATENTSCHRIFT

(11) **EP 3 163 294 B1**
(45) Veröffentlichungstag und Bekanntmachung des Hinweises auf die Patenterteilung: **02.12.2020**
(21) Anmeldenummer: 16195480.5
(22) Anmeldetag: 25.10.2016
(51) Int. Cl.: G01N 23/223

(54) **VERFAHREN ZUM NACHWEIS VON OBERFLÄCHENVERUNREINIGUNGEN MITTELS RÖNTGENFLUORESZENZANALYSE**
METHOD OF DETECTING SURFACE CONTAMINATION BY X-RAY FLUORESCENCE ANALYSIS
PROCÉDÉ DE DÉTECTION DE LA CONTAMINATION D'UNE SURFACE PAR ANALYSE DE FLUORESCENCE DE RAYONS-X

(30) Priorität: 30.10.2015 DE 102015221323
(43) Veröffentlichungstag der Anmeldung: 03.05.2017
(73) Patentinhaber: Airbus Defence and Space GmbH, 82024 Taufkirchen (DE)
(72) Erfinder: HECKNER, Sebastian, 81735 München (DE); WACHINGER, Georg, 83026 Rosenheim (DE); MEER, Thomas, 85658 Egmating (DE); GEISTBECK, Matthias, 87719 Mindelheim (DE)
(74) Vertreter: Krebs, Jörg

(56) Entgegenhaltungen:
- WO-A1-2014/186292
- Kerstin Albinsky ET AL: "advances in bonded repair of cfrp aircraft structures by surface inspection", 2nd international conference on Advanced Composite Materials and Technologies for Aerospace Applications, 13. Juni 2012 (2012-06-13), Seiten 38-42, XP055345127, Gefunden im Internet: URL:https://books.google.nl/books?id=PLPOA wAAQBAJ&pg=PA38&lpg=PA38&dq=%22advances+in +bonded+repair+of+cfrp+aircraft+structures +by+surface+inspection%22+conference&sourc e=bl&ots=01ttGMVyun&sig=lgw332OlB3hVtf7zoK Mw47OTxgo&hl=en&sa=X&ved=0ahUKEwjDkvjMo43S AhVCChoKHcq5DYkQ6AEIITAA#v=onepage&q=%22ad vances%20i [gefunden am 2017-02-13]

## Beschreibung

Die vorliegende Erfindung betrifft ein Verfahren zum Nachweis von Oberflächenverunreinigungen mittels Röntgenfluoreszenzanalyse. Insbesondere befasst sich die vorliegende Erfindung mit dem Nachweis von Oberflächenverunreinigungen auf Bauteilen aus Faserverbundkunststoff für den Einsatz in Luft- oder Raumfahrzeugen.

Obwohl in vielfältigen Anwendungen zur Untersuchung von Oberflächen unterschiedlichster Strukturen und unterschiedlicher Materialien verwendbar, werden die vorliegende Erfindung sowie die ihr zugrunde liegende Problematik in Bezug auf die Oberflächenanalyse von Flugzeugstrukturen aus Faserverbundkunststoff näher erläutert.

Für die industrielle Fertigung von Formbauteilen aus faserverstärktem Kunststoff (FVK), insbesondere kohlefaserverstärktem Kunststoff (CFK), werden oftmals so genannte Formwerkzeuge verwendet, in denen die Bauteile ihre Gestalt erhalten. Hierzu kann beispielsweise ein Halbzeug aus Fasermaterial, z.B. Matten aus unidirektionalen Kohlenstofffaserlagen, mit einem Matrixmaterial, z.B. Epoxidharz, imprägniert werden und in dem Formwerkzeug durch Anwendung von Druck und Temperatur ausgehärtet werden. Die Formoberfläche des Formwerkzeugs bestimmt hierbei die Oberflächenkontur des fertigen Bauteils, wie es nach dem Aushärten zurückbleibt. Solche Formwerkzeuge werden vor ihrer Verwendung oftmals mit einem Trennmittel beschichtet (z.B. durch Auftragen eines flüssigen chemischen Trennmittels), um die fertigen Bauteile möglichst leicht aus dem Formwerkzeug auslösen zu können. Nach dem Entformen des Bauteils können, je nach Fertigungsmethode, unerwünschte Trennmittelrückstände sowohl an der Formoberfläche als auch an dem Bauteil zurückbleiben.

Generell ist es wünschenswert FVK-Bauteile mit einer möglichst genau definierten und sauberen Oberfläche zu bilden und zu erhalten, um die weitere Verwendung bzw. Bearbeitung zu gewährleisten. So kann beispielsweise das Klebeverhalten eines Bauteils dadurch beeinflusst werden, dass dessen Oberfläche verunreinigt oder mit unerwünschten Stoffen kontaminiert ist. Weiterhin sind gute Adhäsionseigenschaften vorteilhaft für eine Lackierung oder Beschichtung eines Bauteils. Demnach besteht ein Bedarf nach Verfahren, welche Verunreinigungen auf Oberflächen von FVK-Bauteilen qualitativ und quantitativ erfassen.

Laserinduzierte Plasmaspektroskopie ermöglicht es beispielsweise, das chemische Element Silizium in Oberflächenkontaminationen aus Siloxanen nachzuweisen. Die Druckschrift US 8,330,109 B2 lehrt als weiteres Beispiel, dass FTIR-Spektroskopie ("fourier-transform-infrared-spectrometer") zum Nachweis von Oberflächenverunreinigungen auf nicht-metallischen Materialien genutzt werden kann. Die Druckschrift DE 10 2011 102 055 B4 beschreibt ferner ein Verfahren, bei dem ein Faserverbundbauteil regional zur Desorption von Kontaminationsstoffen erwärmt wird, welche daraufhin als Gas von mehreren Sensoren erfasst werden. Allgemein können in ähnlichen Verfahren Probeflächen mit verschiedenen Strahlungsformen aufgeheizt werden, um schwerflüchtige Stoffe zumindest teilweise in Gas umzuwandeln und anschließend mit einem Detektor nachzuweisen. Darüber hinaus sind beispielsweise aus der Druckschrift US 8,064,570 B2 handgehaltene Analysegeräte für die Röntgenfluoreszenzanalyse (RFA) bekannt, mit welchen Elemente in Stoffproben nachweisbar sind. Ferner sind aus den Druckschriften WO 2014/186292 A1 und Kerstin Albinsky et al., "Advances in Bonded Repair of CFRP Aircraft Structures by Surface Inspection," 2nd International Conference on Advanced Composite Materials and Technologies for Aerospace Applications, June 13, 2012, mobile RFA-Analyseeinheiten bekannt.

Vor diesem Hintergrund liegt der vorliegenden Erfindung die Aufgabe zugrunde, Lösungen für Nachweisverfahren zu finden, welche es ermöglichen, auch geringe Oberflächenverunreinigungen einfach, schnell und zerstörungsfrei zu messen.

Erfindungsgemäß wird diese Aufgabe gelöst durch ein Verfahren mit den Merkmalen des Patentanspruchs 1.

Demgemäß ist ein Verfahren zum Nachweis von Oberflächenverunreinigungen auf einer Oberfläche eines Bauteils mittels Röntgenfluoreszenzanalyse mit einem Hand-Spektroskop zum Anlegen an die Oberfläche des Bauteils vorgesehen. Das Hand-Spektroskop weist eine Röntgenquelle, einen Fluoreszenzstrahlungsdetektor, eine Analyseeinrichtung und eine Anzeigeeinrichtung auf. Das Verfahren umfasst Bestrahlen der Oberfläche des Bauteils mit Röntgenstrahlen durch die Röntgenquelle. Ferner umfasst das Verfahren Detektieren von Fluoreszenzstrahlung mit dem Fluoreszenzstrahlungsdetektor, welche von der Oberfläche des Bauteils aufgrund der Bestrahlung mit den Röntgenstrahlen emittiert wird. Ferner umfasst das Verfahren Messen eines Strahlungsspektrums der detektierten Fluoreszenzstrahlung. Ferner umfasst das Verfahren Bilden eines Auswertungsergebnisses durch Analyse des gemessenen Strahlungsspektrums durch die Analyseeinrichtung, wobei das Auswertungsergebnis ein quantitatives Maß für die Oberflächenverunreinigung der Oberfläche durch vorgegebene charakteristische Stoffe umfasst. Ferner umfasst das Verfahren Ausgeben des gebildeten Auswertungsergebnisses auf der Anzeigeeinrichtung. Das Bilden des Auswertungsergebnisses umfasst eine multivariate Analyse des gemessenen Strahlungsspektrums auf Basis eines chemometrischen Verfahrens. Das Verfahren wird zum Nachweis von Oberflächenverunreinigungen auf einer Oberfläche eines Bauteils aus faserverstärktem Kunststoff (FVK) durchgeführt. Die charakteristischen Stoffe umfassen Komponenten von Trennmitteln zur Herstellung von FVK-Bauteilen.

Die der vorliegenden Erfindung zugrunde liegende Idee besteht darin, Röntgenfluoreszenzanalyse (RFA) bzw. Röntgenfluoreszenzspektroskopie (RFS) zur zerstörungsfreien Analyse von kontaminierten bzw. verunreinigten Oberflächen zu verwenden. Hierbei wird das Material der entsprechenden Oberfläche mit Hilfe von Röntgenstrahlen angeregt, wodurch Elektronen aus den inneren Schalen der Oberflächenatome herausgeschlagen werden. Die Leerstellen werden von Elektronen aus höheren Energieniveaus nachbesetzt, wobei Energie in Form von Fluoreszenzstrahlung abgestrahlt wird, deren Spektrum wiederum spezifisch für die Elementzusammensetzung der Oberfläche ist. So können sich bestimmte Elemente beispielsweise als Peaks in der Intensität der Strahlung bemerkbar machen, deren Höhe, Breite und/oder Fläche kennzeichnend für die enthaltene Stoffmenge des jeweiligen Elements sein kann. Nachzuweisende Trennmittel enthalten typischerweise bestimmte charakteristische Elemente bzw. charakteristische Stoffe, die mit dem erfindungsgemäßen Verfahren demnach nachweisbar sind. Beispielsweise basieren die bei der Herstellung von CFK-Bauteilen verwendeten Trennmittel vielfach auf der trennenden Wirkung von Silizium, Fluorkohlenwasserstoffen, insbesondere auch perfluorierten Fluorkohlenwasserstoffen, und/oder Kohlenwasserstoffen. Beispielsweise kann in bestimmten Anwendungen ein Bedarf bestehen, Polytetrafluorethylene (PTFE, z.B. Teflon®) oder Wachsöle nachzuweisen.

Ein besonderer Vorteil der erfindungsgemäßen Lösung besteht darin, dass ein handgehaltenes, d.h. tragbares, Röntgenfluoreszenzspektroskop verwendet wird, um die Elementzusammensetzung von Oberflächen zerstörungsfrei zu analysieren. Ein solches Hand-Spektroskop ist besonders praktisch und einfach zu handhaben. Zur Analyse einer Oberfläche muss dieses einfach nur eine Zeitlang an die Oberfläche angelegt werden. Das erfindungsgemäße Verfahren ist darüber hinaus besonders sensitiv und kann auch auf geringste Schichtdicken bis hin zu Monolagen angewendet werden, um auch geringe Kontaminationen nachzuweisen. Die erfassten Daten werden mit Hilfe der Analyseeinrichtung automatisch und in situ analysiert und dem Nutzer mit der Anzeigeeinrichtung direkt zugänglich gemacht. Die Erfindung ermöglicht es insbesondere, Trennmittelreste mit einem tragbaren Gerät innerhalb extrem kurzer Messzeiten unterhalb einer Minute, d.h. in der Größenordnung von Sekunden, auf Oberflächen nachzuweisen. Die erfindungsgemäße Lösung ist speziell für die Untersuchung von FVK- bzw. CFK-Oberflächen vorteilhaft, wie sie beispielsweise in Luftfahrzeugen oder Raumfahrzeugen vermehrt Verwendung finden, da die hier nachzuweisenden Trennmittel ausschließlich im Bereich der Oberfläche auftreten. Bestimmte für die Trennmittel charakteristische Komponenten sind somit ausschließlich oder vorwiegend im Bereich einer verunreinigten Oberfläche zu finden, wodurch diese das abgestrahlte Fluoreszenzspektrum eines Bauteils auch schon bei geringen Stoffmengen nachweisbar charakterisieren. Die vorliegende Erfindung lässt sich beispielsweise für den Oberflächen-Kontaminationsnachweis im Zuge von Klebe- und/oder Reparaturprozessen und/oder Lackierungsarbeiten verwenden. Analysierbare Oberflächen umfassen hierbei organische als auch anorganische Zusammensetzungen. Insbesondere der Nachweis der Zusammensetzung und der Menge von Trennmittelresten, z.B. flüssige Trennmittel, auf FVK-Werkstoffen kann schnell und einfach erbracht werden, so dass diese im Anschluss entfernt werden können und deren Entfernung validiert werden kann.

In bekannten Verfahren gestaltet sich die Messung von Oberflächenverunreinigungen in flüssiger oder fester Form als außerordentlich schwierig, da die Kontaminationen in typischen Anwendungen in sehr geringen Schichtdicken auftreten und die nachzuweisenden Elemente dementsprechend nur in sehr geringen Stoffmengen vorhanden sind. Hierzu sind oberflächensensitive Methoden wie jene der vorliegenden Erfindung vorteilhaft. In typischen bekannten Verfahren sind die unteren Grenzen der Sensitivität häufig unzulänglich, um solche geringen Stoffmengen quantitativ auch in kurzer Zeit nachzuweisen. Häufig zeichnen sich die bekannten Verfahren zudem durch einen komplexen und unhandlichen sowie fest installierten Aufbau aus (Strahlungsquellen, Detektoreinheit, Analyseeinheit etc.). Beispielsweise lassen sich Verfahren, denen eine Abtrennung der Kontaminationsstoffe in eine gasförmige Phase zugrunde liegt, nicht zum Nachweis von schwerflüchtigen Trennmittelresten verwenden, da diese sich nicht notwendigerweise überhaupt ohne erheblichen Aufwand und ohne Schädigung des Substrat Materials in eine Gasphase überführen lassen können müssen. Das Verfahren gemäß der vorliegenden Erfindung ermöglicht hingegen eine einfache, schnelle und zerstörungsfreie Analyse auch von geringen Oberflächenverunreinigungen.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Bilden des Auswertungsergebnisses das Vergleichen des gemessenen Strahlungsspektrums mit einem oder mehreren Referenzspektren von gereinigten Oberflächen und/oder von definiert verunreinigten Oberflächen umfassen. Mit Hilfe der Referenzspektren wird das Hand-Spektroskop gewissermaßen kalibriert, um somit durch Vergleich mit den Referenzspektren vollautomatisch und schnell quantitative Messergebnisse liefern zu können. Beispielsweise kann es vorgesehen sein, dass bestimmte Referenzspektren in einer Speichereinrichtung (z.B. eine Speicherkarte) in dem Hand-Spektroskop abgespeichert sind, so dass diese jederzeit (automatisch) abrufbar sind. Beispielsweise können Referenzspektren bereits herstellerseitig auf das Hand-Spektroskop aufgespielt sein. Darüber hinaus kann es jedoch vorgesehen sein, dass Nutzer auch selbstständig neue Referenzspektren ergänzen können. Zum Beispiel kann ein Bauteil mit zu analysierender Oberfläche in mehreren Ausführungen vorliegen. Eine Ausführung des Bauteils kann beispielsweise eine im Wesentlichen von Trennmitteln und/oder anderen Verunreinigungen gereinigte Oberfläche aufweisen. Eine weitere Ausführung des Bauteils kann hingegen eine verunreinigte Oberfläche aufweisen, wobei die spezifische Verunreinigung jedoch bekannt sein kann, beispielsweise können diese Verunreinigungen mittels anderer Verfahren festgestellt worden sein und/oder kontrolliert in definierter Weise aufgetragen worden sein. In einem ersten Schritt kann ein Benutzer nun das erfindungsgemäße Verfahren auf das gereinigte Bauteil anwenden und mit dem Hand-Spektroskop ein Strahlungsspektrum messen. Das erhaltene Strahlungsspektrum kann wiederum in der Speichereinrichtung des Hand-Spektroskops als Referenzspektrum gespeichert werden. In einem zweiten Schritt kann der Nutzer das erfindungsgemäße Verfahren in entsprechender Weise auf das definiert verunreinigte Bauteil anwenden, um das hieraus erhaltene Strahlungsspektrum ebenfalls als weiteres Referenzspektrum abzuspeichern. In einem dritten Schritt kann der Nutzer nun die Oberfläche eines dritten Bauteils mit unbekannter Oberflächenverunreinigung analysieren, wobei das von dem dritten Bauteil erhaltene Strahlungsspektrum mit einem oder mehreren der zuvor erhaltenen Referenzspektren verglichen werden kann, um ein objektives quantitatives Maß für die Verunreinigung der Oberfläche des dritten Bauteils zu erhalten. Prinzipiell kann der Nutzer eine im Wesentlichen beliebige Anzahl von Referenzspektren aufnehmen und zur späteren Verwendung abspeichern.

Gemäß einer Weiterbildung kann das Bilden des Auswertungsergebnisses das Vergleichen des gemessenen Strahlungsspektrums mit Kalibrationskurven umfassen, welche aus Röntgenfluoreszenzanalyse von Stoffproben gewonnen werden. Diese Kalibrationskurven können beispielsweise aus bestimmten, definierten Stoffproben entnommen sein (im Unterschied zu Strahlungsspektren, welche aus der Oberflächenanalyse konkreter Bauteil gewonnen wurden). Eine Analyse einer Oberflächenverunreinigung eines bestimmten Bauteils kann durch Verwendung solcher Kalibrationskurven ergänzt werden bzw. deren Genauigkeit kann durch Verwendung dieser verbessert werden. Die Eigenschaften bestimmter Stoffe können so unter fest vorgegebenen Bedingungen berücksichtigt werden.

Gemäß einer Weiterbildung kann das Bilden des Auswertungsergebnisses eine univariate, d.h. eindimensionale, Analyse von Peakhöhen, Peakbreiten, und/oder Peakflächen von Strahlungsintensitäten des gemessenen Strahlungsspektrums umfassen, welche den charakteristischen Stoffen zugordnet sind. In dieser Weiterbildung kann das Verfahren besonders einfach, schnell und gleichzeitig robust ausgebildet werden, so dass Messergebnisse in kürzester Zeit verfügbar sein können.

Gemäß der Erfindung umfasst das Bilden des Auswertungsergebnisses eine multivariate, d.h. mehrdimensionale, Analyse des gemessenen Strahlungsspektrums auf Basis eines chemometrischen Verfahrens. In dem Verfahren können somit bekannte mathematische bzw. statistische Werkzeuge aus dem Bereich der multivariaten Datenanalyse Verwendung finden. Solche Verfahren können insbesondere für den Nachweise sehr geringer Verunreinigungen genutzt werden, für welche einfachere Analysemethoden eventuell nicht ausreichend sensitiv sein können. Der Fachmann wird entsprechend zwischen verschiedenen Analysemethoden wählen können, um einen für die jeweilige Anwendung geeigneten Kompromiss zwischen Genauigkeit und Komplexität, d.h. letztendlich der Zeitdauer, der Analyse zu finden. In Weiterbildungen des Hand-Spektroskops können unterschiedliche Analysemethoden implementiert sein, z.B. können diese in der Speichereinrichtung gespeichert sein, wobei der Nutzer unter verschiedenen Optionen auswählen kann.

Gemäß einer Weiterbildung kann das chemometrische Verfahren eine Hauptkomponentenanalyse und/oder eine Partial-Least-Squares-Analyse oder ähnliche multivariate Analyseverfahren umfassen. Eine Hauptkomponentenanalyse ("principal component analysis", PCA) ist eines von vielen vorteilhaften Verfahren der multivariaten Datenanalyse. Hierbei wird eine Vielzahl statistischer (korrelierter) Variablen durch eine geringere Zahl möglichst aussagekräftiger (unkorrelierter) Hauptkomponenten, d.h. vorteilhaften Linearkombinationen der Variablen, angenähert (so genannte latente Variablen). Die Partial-Least-Squares-Analyse (PLS) stellt ein weiteres Verfahren der multivariaten Datenanalyse dar, welches eine einfache multiple lineare Regression in solchen Fällen verbessern bzw. ersetzen kann, in denen eine sehr große Anzahl von Variablen vorliegt bzw. diese hochkorrelierend sind. Ähnlich wie bei der Hauptkomponentenanalyse wird hierbei davon ausgegangen, dass die Daten mit einer kleineren Anzahl von latenten Variablen annäherbar sind.

Gemäß der Erfindung wird das Verfahren zum Nachweis von Oberflächenverunreinigungen auf einer Oberfläche eines Bauteils aus faserverstärktem Kunststoff (FVK) durchgeführt.

Gemäß einer Weiterbildung kann der FVK ein kohlenstofffaserverstärkter Kunststoff (CFK) sein.

Gemäß der Erfindung umfassen die charakteristischen Stoffe Komponenten von Trennmitteln zur Herstellung von FVK-Bauteilen. Beispielsweise kann es sich hierbei um ein flüssiges Trennmittel handeln.

Gemäß einer Weiterbildung können die charakteristischen Stoffe Silizium, Fluorkohlenwasserstoffe und/oder Kohlenwasserstoffe umfassen.

Gemäß einer Weiterbildung kann das Hand-Spektroskop ferner ein strahlungsdurchlässiges Strahlungsfenster, einen an das Strahlungsfenster angrenzenden, ein kontrolliertes Volumen definierenden Messraum und eine mit dem Messraum gekoppelte Gasspülungseinrichtung aufweisen. Das Verfahren kann ferner das Spülen des Messraums mit einem Betriebsgas durch die Gasspülungseinrichtung umfassen. Das Betriebsgas, z.B. Helium, kann dem Hand-Spektroskop beispielsweise über eine Gaszufuhr zugeführt werden. Das Helium verdrängt die Luft zwischen dem Strahlungsfenster und Fluoreszenzstrahlungsdetektor des Hand-Spektroskops, wodurch verhindert wird, dass die Röntgenstrahlen von der Umgebung absorbiert werden, bevor sie auf den Detektor treffen. Hierdurch kann die Empfindlichkeit des Hand-Spektroskops signifikant verbessert werden.

Gemäß einer Weiterbildung kann das Hand-Spektroskop ferner eine Datenschnittstelle aufweisen. Das Verfahren kann ferner den Verfahrensschritt des Übermittelns des gemessenen Strahlungsspektrums und/oder des Auswertungsergebnisses über die Datenschnittstelle an externe Datenverarbeitungsvorrichtungen umfassen. Beispielsweise kann die Analyseeinrichtung des Hand-Spektroskop einen Mikroprozessor oder ähnlich umfassen. Die Datenschnittstelle kann beispielsweise ein USB-Anschluss, eine Bluetooth®- oder WLAN-Einheit oder ähnliches sein. Hierdurch können die mit dem Hand-Spektroskop erfassten Daten beispielsweise an einen externen Computer übertragen werden, um diese dort weiterzuverarbeiten.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische Querschnittsansicht einer Oberfläche eines Bauteils mit angelegtem Hand-Spektroskop zum Nachweis von Oberflächenverunreinigungen auf der Oberfläche mittels Röntgenfluoreszenzanalyse gemäß einer Ausführungsform der Erfindung;
- Fig. 2: ein schematisches Ablaufdiagramm der Auswertung von Strahlungsspektren, welche mit dem Hand-Spektroskop in Fig. 1 gemessenen wurden; und
- Fig. 3: ein schematisches Ablaufdiagramm eines Verfahrens zum Nachweis von Oberflächenverunreinigungen auf einer Oberfläche eines Bauteils mittels Röntgenfluoreszenzanalyse gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

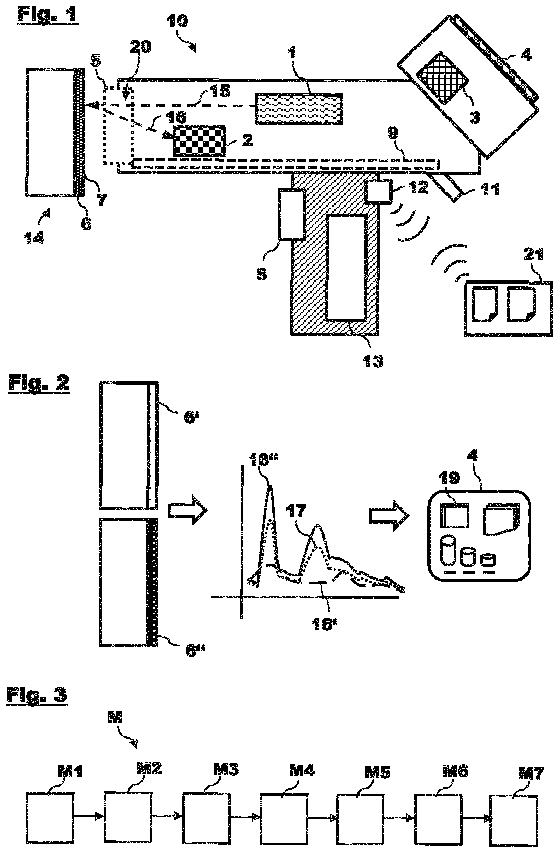

Fig. 1 zeigt eine schematische Querschnittsansicht einer Oberfläche eines Bauteils mit angelegtem Hand-Spektroskop zum Nachweis von Oberflächenverunreinigungen auf der Oberfläche mittels Röntgenfluoreszenzanalyse gemäß einer Ausführungsform der Erfindung.

In Fig. 1a bezeichnet das Bezugszeichen 10 das Hand-Spektroskop 1. Das Hand-Spektroskop 10 ist dazu ausgebildet, von einem Nutzer in der Hand getragen zu werden, um eine Röntgenfluoreszenzanalyse in situ an einem Bauteil 14 vorzunehmen. Das Hand-Spektroskop 10 umfasst grundlegend eine Röntgenquelle 1, einen Fluoreszenzstrahlungsdetektor 2, eine Analyseeinrichtung 3 und eine Anzeigeeinrichtung 4. Das Hand-Spektroskop 10 kann ferner einen Energiespeicher 13, z.B. eine Batterie oder dergleichen, umfassen bzw. alternativ oder zusätzlich dazu ausgebildet sein, an eine externe Spannungsquelle angeschlossen zu werden.

Zur Durchführung der Röntgenfluoreszenzanalyse kann das Hand-Spektroskop 10 an die Oberfläche 6 eines Bauteils 14 gehalten werden. Beispielsweise kann es hierbei um ein Bauteil 14 aus kohlenfaserverstärktem Kunststoff (CFK) handeln, dessen Oberfläche 6 herstellungsbedingt mit Rückständen von Trennmitteln verunreinigt bzw. kontaminiert ist (Oberflächenverunreinigung 7). Insbesondere kann es sich hierbei um ein Bauteil 14 für den Einsatz in Luft- oder Raumfahrzeugen handeln, wie beispielsweise ein Strukturbauteil (Stringer, Spant, Hautfeldabschnitt oder dergleichen) oder ein Kabinenausstattungselement etc.

Die Röntgenquelle 1 dient hierbei zur Aussendung von Röntgenstrahlen 15, welche durch ein strahlungsdurchlässiges Strahlungsfenster 5 des Hand-Spektroskops 10 auf die Oberfläche 6 treffen und diese zur Aussendung von Fluoreszenzstrahlung 16 anregen. Beispielsweise kann ein Betätigungselement 8 an einem Haltegriff oder dergleichen in dem Hand-Spektroskop 10 vorgesehen sein, mit welchem das Aussenden der Röntgenstrahlen 15 ausgelöst bzw. abgebrochen werden kann. Das Strahlungsfenster 5 kann hierbei über seine geometrische Lage zudem als Fokussierabstand zwischen der Röntgenquelle 1 und der Oberfläche 6 dienen. Die von der Oberfläche 6 emittierte Fluoreszenzstrahlung 16 tritt wiederum zurück durch das Strahlungsfenster 5 hindurch in das Hand-Spektroskop 10 ein und wird dort von dem Fluoreszenzstrahlungsdetektor 2 detektiert. Der Fluoreszenzstrahlungsdetektor 2 misst hierbei insbesondere ein Strahlungsspektrum 17 der detektierten Fluoreszenzstrahlung 16. Ferner ist ein Messraum 20 angrenzend an das Strahlungsfenster 5 in dem Hand-Spektroskop 10 vorgesehen, welcher ein kontrolliertes Volumen definiert und mit einer Gasspülungseinrichtung 9 gekoppelt ist. Vor dem Bestrahlen der Oberfläche 6 des Bauteils 14 mit Röntgenstrahlen 15 kann der Messraum 20 mit Hilfe der Gasspülungseinrichtung 9 mit einem Betriebsgas (z.B. Helium) gespült werden, um die Luft zwischen dem Strahlungsfenster 5 und dem Fluoreszenzstrahlungsdetektor 2 des Hand-Spektroskops 10 zu verdrängen. Dadurch kann die Empfindlichkeit des Hand-Spektroskops 10 signifikant verbessert werden. Die Gasspülungseinrichtung 9 kann beispielsweise über eine Gaszufuhr 11 versorgt werden, welche in das Hand-Spektroskop 10 eingelassen ist.

Die Analyseeinrichtung 3 kann beispielsweise einen Mikroprozessor oder dergleichen enthalten, mit welchem das von dem Fluoreszenzstrahlungsdetektor 2 gemessene Strahlungsspektrum 17 ausgewertet werden kann, wie mit Bezug auf Fig. 2 und 3 untenstehend näher erläutert wird. Die Analyseeinrichtung 3 ist dazu ausgebildet, ein Auswertungsergebnis 19 aus dem gemessenen Strahlungsspektrum 17 zu extrahieren, welches unter anderem ein quantitatives Maß für die Oberflächenverunreinigung 7 der Oberfläche 6 durch vorgegebene charakteristische Stoffe umfasst. Charakteristische Stoffe im Sinne der Erfindung umfassen unter anderem elementare Bestandteile der Trennmittel, welche in der CFK-Herstellung typischerweise Verwendung finden. Insbesondere umfassen die charakteristischen Stoffe elementares Silizium, Fluorkohlenwasserstoffe und/oder Kohlenwasserstoffe. Die Analyseeinrichtung 3 kann hierzu insbesondere eine Analyse-Software umfassen, die sowohl univariate als auch komplexe multivariate Analyse-Tools zur statistischen Datenanalyse umfassen kann.

Die Anzeigeeinrichtung 4 kann beispielsweise als Display, Monitor oder dergleichen dazu ausgebildet sein, einem Nutzer das von der Analyseeinrichtung 3 gebildete Auswertungsergebnis 19 auszugeben, beispielsweise in einer grafischer Aufbereitung ähnlich einem Computermonitor. Darüber hinaus kann die Anzeigeeinrichtung 4 weitere relevante Informationen ausgeben, wie gemessene oder gespeicherter Strahlungsspektren 17, Kalibrierungs- und/oder Fokussierungsdaten etc.

Das Hand-Spektroskop 10 weist ferner eine Datenschnittstelle 12 auf, über welche die aufgenommen Daten, z.B. das gemessene Strahlungsspektrum 17, und die Analyseergebnisse, z.B. das Auswertungsergebnis 19, an eine externe Datenverarbeitungsvorrichtung 21, z.B. ein Computernetzwerk, ein Computer oder dergleichen, übermittelt werden können. Die Datenschnittstelle kann beispielsweise ein USB-Anschluss, eine Bluetooth®- oder WLAN-Einheit oder ähnliches sein, worüber die erfassten Daten beispielsweise an einen externen Computer übertragbar sind. Fig. 2 zeigt ein schematisches Ablaufdiagramm der Auswertung von Strahlungsspektren 17, welche mit dem Hand-Spektroskop 10 in Fig. 1 gemessenen wurden. Fig. 3 zeigt hierzu ein schematisches Ablaufdiagramm des grundlegenden Verfahrens M zum Nachweis der Oberflächenverunreinigungen 7 auf der Oberfläche 6 des Bauteils 14 mittels Röntgenfluoreszenzanalyse.

Das Verfahren M umfasst unter M1 optional das Spülen des Messraums 20 mit einem Betriebsgas durch die Gasspülungseinrichtung 9. Ferner umfasst das Verfahren M unter M2 das Bestrahlen der Oberfläche 6 des Bauteils 14 mit Röntgenstrahlen 15 durch die Röntgenquelle 1. Als nächstes umfasst das Verfahren unter M3 das Detektieren von Fluoreszenzstrahlung 16 mit dem Fluoreszenzstrahlungsdetektor 2. Die Fluoreszenzstrahlung 16 wird von der Oberfläche 6 des Bauteils 14 aufgrund der Bestrahlung mit den Röntgenstrahlen 15 emittiert. In einem nächsten Schritt umfasst das Verfahren unter M4 das Messen eines Strahlungsspektrums 17 der detektierten Fluoreszenzstrahlung 16.

Ferner umfasst das Verfahren unter M5 das Bilden eines Auswertungsergebnisses 19 durch Analyse des gemessenen Strahlungsspektrums 17 durch die Analyseeinrichtung 3. Das Auswertungsergebnis 19 umfasst hierbei ein quantitatives Maß für die Oberflächenverunreinigung 7 der Oberfläche 6 durch vorgegebene charakteristische Stoffe. Das gemessene Strahlungsspektrum 17 kann mit einem oder mehreren Referenzspektren 18', 18" von gereinigten Oberflächen 6' und/oder von definiert verunreinigten Oberflächen 6" verglichen werden. Alternativ oder zusätzlich kann das Bilden des Auswertungsergebnisses 19 das Vergleichen des gemessenen Strahlungsspektrums 17 mit Kalibrationskurven umfassen, welche aus Röntgenfluoreszenzanalyse von Stoffproben gewonnen werden. Die Analyseeinrichtung 3 kann dazu ausgebildet sein, zur Bildung des Auswertungsergebnisses 19 univariate und/oder multivariate Analyseverfahren zu verwenden. Beispielsweise kann das Verfahren M die Analyse von Peakhöhen, Peakbreiten, und/oder Peakflächen von Strahlungsintensitäten des gemessenen Strahlungsspektrums 17 umfassen. Ferner kann das Verfahren M eine multivariate Analyse des gemessenen Strahlungsspektrums 17 auf Basis eines chemometrischen Verfahrens umfassen, welches beispielsweise eine Hauptkomponentenanalyse und/oder eine Partial-Least-Squares-Analyse enthalten kann.

Als nächstes umfasst das Verfahren unter M6 das Ausgeben des gebildeten Auswertungsergebnisses 19 auf der Anzeigeeinrichtung 4. Abschließend umfasst das Verfahren unter M7 den optionalen Schritt des Übermittelns des gemessenen Strahlungsspektrums 17 und/oder des Auswertungsergebnisses 19 an eine externe Datenverarbeitungsvorrichtung 21.

Fig. 2 zeigt schematisch den grundsätzlichen Ablauf der Analyse des gemessenen Strahlungsspektrums 17 zum Bilden eines Auswertungsergebnisses 19. Das Verfahren M sieht vor, das gemessene Strahlungsspektrum 17 (Mitte in Fig. 2) mit Referenzspektren 18', 18" zu vergleichen und darauf aufbauend zu analysieren, ob charakteristische Stoff in der dem Strahlungsspektrum 17 zugehörigen Oberfläche 6 (siehe Fig. 1) in nachweisbaren Stoffmengen enthalten sind oder nicht, d.h. ob die Oberfläche 6 mit diesen Stoffen kontaminiert bzw. verunreinigt ist. Mit Hilfe der Referenzspektren 18', 18" wird das Hand-Spektroskop 10 gewissermaßen kalibriert. Es kann vorgesehen sein, dass dieser Vergleich mit den Referenzspektren 18', 18" sowie die gesamte Analyse des gemessenen Strahlungsspektrums 17 von der Analyseeinrichtung 3 vollautomatisch durchgeführt wird. Alternativ kann jedoch genauso vorgesehen sein, dass einzelne Schritte oder Aspekte der Analyse oder des Verfahrens (M) durch Eingabe oder Konfiguration eines Nutzers händisch einstellbar bzw. auswählbar sind. Eine vollautomatische Analyse bietet den Vorteil, dass quantitative Messergebnisse sehr schnell und bequem ausgegeben werden können. Beispielsweise kann es vorgesehen sein, dass bestimmte Referenzspektren 18', 18" bereits auf einer Speicherkarte (nicht abgebildet) des Hand-Spektroskops 10 abgespeichert sind, so dass diese jederzeit automatisch abrufbar sind.

Darüber hinaus kann es jedoch vorgesehen sein, dass ein Nutzer selbstständig neue Referenzspektren 18', 18" ergänzen kann. Als Beispiel zeigt Fig. 2 zwei Oberflächen 6', 6". Beispielsweise kann eine erste der beiden Oberflächen 6' gereinigt sein, während eine zweite der beiden Oberflächen 6" in definierter und kontrollierter Weise mit bekannten charakteristischen Stoffen verunreinigt ist. In einem Schritt kann ein Nutzer nun das Verfahren M auf die gereinigte Oberfläche 6' anwenden und mit dem Hand-Spektroskop 10 ein erstes Referenzspektrum 18' messen und abspeichern. In einem anderen Schritt kann der Nutzer das Verfahren M in entsprechender Weise auf die definiert verunreinigte Oberfläche 6" anwenden, um das hieraus erhaltene weitere Referenzspektrum 18" ebenfalls abzuspeichern. Nach der Messung des Strahlungsspektrums 17 der zu untersuchenden Oberfläche 6, kann dieses nun mit den zuvor erhaltenen Referenzspektren 18', 18" verglichen werden und hieraus ein objektives quantitatives Maß für die Verunreinigung der Oberfläche 6 des Bauteils 14 gewonnen werden.

Das Verfahren M ermöglicht eine einfache, schnelle, automatische und zerstörungsfreie Analyse auch von geringen Oberflächenverunreinigungen 7 und ist aus diesem Grund besonders praktikabel. Das Verfahren M kann in vielfältigen Anwendungen genutzt werden, welche insbesondere die Herstellung und Nutzung von faserverstärkten Kunststoffbauteilen beinhalten. So kann die vorliegende Erfindung insbesondere im Transportwesen, z.B. im Luft- und Raumfahrzeugbau, im Schiffsbau oder ähnlichen eingesetzt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Röntgenquelle
- 2: Fluoreszenzstrahlungsdetektor
- 3: Analyseeinrichtung
- 4: Anzeigeeinrichtung
- 5: Strahlungsfenster
- 6, 6', 6": Oberfläche
- 7: Oberflächenverunreinigung
- 8: Betätigungselement
- 9: Gasspülungseinrichtung
- 10: Hand-Spektroskop
- 11: Gaszufuhr
- 12: Datenschnittstelle
- 13: Energiespeicher
- 14: Bauteil
- 15: Röntgenstrahlung
- 16: Fluoreszenzstrahlung
- 17: Strahlungsspektrum
- 18', 18": Referenzspektrum
- 19: Auswertungsergebnis
- 20: Messraum
- 21: externe Datenverarbeitungsvorrichtung
- M: Verfahren
- M1: Verfahrensschritt
- M2: Verfahrensschritt
- M3: Verfahrensschritt
- M4: Verfahrensschritt
- M5: Verfahrensschritt
- M6: Verfahrensschritt
- M7: Verfahrensschritt

## Patentansprüche

1. Verfahren (M) zum Nachweis von Oberflächenverunreinigungen (7) auf einer Oberfläche (6) eines Bauteils (14) mittels Röntgenfluoreszenzanalyse mit einem Hand-Spektroskop (10) zum Anlegen an die Oberfläche (6) des Bauteils (14), wobei das Hand-Spektroskop (10) eine Röntgenquelle (1), einen Fluoreszenzstrahlungsdetektor (2), eine Analyseeinrichtung (3) und eine Anzeigeeinrichtung (4) aufweist, wobei das Verfahren (M) die folgenden Verfahrensschritte umfasst:
Bestrahlen (M2) der Oberfläche (6) des Bauteils (14) mit Röntgenstrahlen (15) durch die Röntgenquelle (1);
Detektieren (M3) von Fluoreszenzstrahlung (16) mit dem Fluoreszenzstrahlungsdetektor (2), welche von der Oberfläche (6) des Bauteils (14) aufgrund der Bestrahlung mit den Röntgenstrahlen (15) emittiert wird;
Messen (M4) eines Strahlungsspektrums (17) der detektierten Fluoreszenzstrahlung (16);
Bilden (M5) eines Auswertungsergebnisses (19) durch Analyse des gemessenen Strahlungsspektrums (17) durch die Analyseeinrichtung (3), wobei das Auswertungsergebnis (19) ein quantitatives Maß für die Oberflächenverunreinigung (7) der Oberfläche (6) durch vorgegebene charakteristische Stoffe umfasst; und
Ausgeben (M6) des gebildeten Auswertungsergebnisses (19) auf der Anzeigeeinrichtung (4);
wobei das Bilden (M5) des Auswertungsergebnisses (19) eine multivariate Analyse des gemessenen Strahlungsspektrums (17) auf Basis eines chemometrischen Verfahrens umfasst;
wobei das Verfahren (M) zum Nachweis von Oberflächenverunreinigungen (7) auf einer Oberfläche (6) eines Bauteils (14) aus faserverstärktem Kunststoff, FVK, durchgeführt wird; und
wobei die charakteristischen Stoffe Komponenten von Trennmitteln zur Herstellung von FVK-Bauteilen umfassen.

2. Verfahren (M) nach Anspruch 1, wobei das Bilden (M5) des Auswertungsergebnisses (19) das Vergleichen des gemessenen Strahlungsspektrums (17) mit einem oder mehreren Referenzspektren (18', 18") von gereinigten Oberflächen (6') und/oder von definiert verunreinigten Oberflächen (6") umfasst.

3. Verfahren (M) nach einem der vorstehenden Ansprüche, wobei das Bilden (M5) des Auswertungsergebnisses (19) das Vergleichen des gemessenen Strahlungsspektrums (17) mit Kalibrationskurven umfasst, welche aus Röntgenfluoreszenzanalyse von Stoffproben gewonnen werden.

4. Verfahren (M) nach einem der vorstehenden Ansprüche, wobei das Bilden (M5) des Auswertungsergebnisses (19) eine univariate Analyse von Peakhöhen, Peakbreiten, und/oder Peakflächen von Strahlungsintensitäten des gemessenen Strahlungsspektrums (17) umfasst, welche den charakteristischen Stoffen zugordnet sind.

5. Verfahren (M) nach einem der vorstehenden Ansprüche, wobei das chemometrische Verfahren eine Hauptkomponentenanalyse und/oder eine Partial-Least-Squares-Analyse umfasst.

6. Verfahren (M) nach einem der vorstehenden Ansprüche, wobei der FVK ein kohlenstofffaserverstärkter Kunststoff, CFK, ist.

7. Verfahren (M) nach einem der vorstehenden Ansprüche, wobei die charakteristischen Stoffe Silizium, Fluorkohlenwasserstoffe und/oder Kohlenwasserstoffe umfassen.

8. Verfahren (M) nach einem der vorstehenden Ansprüche,
wobei das Hand-Spektroskop (10) ferner ein strahlungsdurchlässiges Strahlungsfenster (5), einen an das Strahlungsfenster (5) angrenzenden, ein kontrolliertes Volumen definierenden Messraum (20) und eine mit dem Messraum (20) gekoppelte Gasspülungseinrichtung (9) aufweist; und
wobei das Verfahren (M) ferner das Spülen (M1) des Messraums (20) mit einem Betriebsgas durch die Gasspülungseinrichtung (9) umfasst.

9. Verfahren (M) nach einem der vorstehenden Ansprüche,
wobei das Hand-Spektroskop (10) ferner eine Datenschnittstelle (12) aufweist; und
wobei das Verfahren (M) ferner den Verfahrensschritt des Übermittelns (M7) des gemessenen Strahlungsspektrums (17) und/oder des Auswertungsergebnisses (19) über die Datenschnittstelle (12) an eine externe Datenverarbeitungsvorrichtung (21) umfasst.

## Claims

1. Method (M) for detecting surface impurities (7) on a surface (6) of a component (14) by means of X-ray fluorescence analysis with a hand spectroscope (10) for application to the surface (6) of the component (14), the hand spectroscope (10) having an X-ray source (1), a fluorescence radiation detector (2), an analysis device (3) and a display device (4), the method (M) comprising the following procedural steps:
irradiating (M2) the surface (6) of the component (14) with X-rays (15) through the X-ray source (1);
detecting (M3) fluorescent radiation (16) with said fluorescent radiation detector (2) emitted from said surface (6) of said component (14) due to said irradiation with said X-rays (15);
measuring (M4) a radiation spectrum (17) of the detected fluorescence radiation (16);
generate (M5) an evaluation result (19) by analysis of the measured radiation spectrum (17) by the analysis device (3), wherein the evaluation result (19) comprises a quantitative measure for the surface contamination (7) of the surface (6) by predetermined characteristic substances; and
Output (M6) of the formed evaluation result (19) on the display unit (4);
wherein the generation (M5) of the evaluation result (19) comprises a multivariate analysis of the measured radiation spectrum (17) on the basis of a chemo-metric method;
wherein the method (M) is performed for detecting surface impurities (7) on a surface (6) of a component (14) made of fiber-reinforced plastic, FRP; and
wherein the characteristic substances comprise components of release agents for the production of FRP components.

2. Method (M) according to claim 1, wherein the generation (M5) of the evaluation result (19) comprises the comparison of the measured radiation spectrum (17) with one or more reference spectra (18', 18") of cleaned surfaces (6') and/or of defined contaminated surfaces (6").

3. Method (M) according to one of the above claims, wherein the generation (M5) of the evaluation result (19) comprises the comparison of the measured radiation spectrum (17) with calibration curves obtained from X-ray fluorescence analysis of material samples.

4. Method (M) according to one of the above claims, wherein the generation (M5) of the evaluation result (19) comprises a univariate analysis of peak heights, peak widths and/or peak areas of radiation intensities of the measured radiation spectrum (17), which are assigned to the characteristic substances.

5. Method (M) according to one of the above claims, wherein the chemo-metric method comprises a principal component analysis and/or a Partial-Least-Squares analysis.

6. Method (M) according to one of the above claims, wherein the FRP is a carbon fiber reinforced plastic, CFRP.

7. Method (M) according to one of the above claims, wherein the characteristic substances comprise silicon, fluorocarbons and/or hydrocarbons.

8. Method (M) according to one of the above claims, wherein the hand spectroscope (10) further comprises a radiation-transmitting radiation window (5), a controlled volume defining measuring chamber (20) adjacent to the radiation window (5) and a gas purging device (9) coupled to the measuring chamber (20); and
wherein the method (M) further comprises flushing (M1) the measuring chamber (20) with an operating gas through the gas flushing means (9).

9. Method (M) according to one of the above claims,
wherein the handheld spectroscope (10) further comprises a data interface (12); and
wherein the method (M) further comprises the method step of transmitting (M7) the measured radiation spectrum (17) and/or the evaluation result (19) via the data interface (12) to an external data processing device (21).

## Revendications

1. Procédé (M) de détection d'impuretés superficielles (7) sur une surface (6) d'un composant (14) au moyen d'une analyse de fluorescence aux rayons X avec un spectroscope manuel (10) pour l'application sur la surface (6) du composant (14), le spectroscope manuel (10) présentant une source de rayons X (1), un détecteur de rayonnement de fluorescence (2), un dispositif d'analyse (3) et un dispositif d'affichage (4), le procédé (M) comprenant les étapes de procédure suivantes :
l'irradiation (M2) de la surface (6) du composant (14) avec des rayons X (15) à travers la source de rayons X (1) ;
détecter (M3) un rayonnement fluorescent (16) avec ledit détecteur de rayonnement fluorescent (2), qui est émis par ladite surface (6) dudit composant (14) en raison de ladite irradiation avec lesdits rayons X (15) ;
en mesurant (M4) un spectre de rayonnement (17) du rayonnement de fluorescence détecté (16) ;
former (M5) un résultat d'évaluation (19) par analyse du spectre de rayonnement mesuré (17) par le dispositif d'analyse (3), le résultat d'évaluation (19) comprenant une mesure quantitative de la contamination (7) de la surface (6) par des substances caractéristiques prédéterminées ; et
Sortie (M6) du résultat d'évaluation formé (19) sur le dispositif d'affichage (4) ;
dans laquelle la formation (M5) du résultat de l'évaluation (19) comprend une analyse multivariée du spectre de rayonnement mesuré (17) sur la base d'une méthode chimiométrique ;
dans lequel ladite méthode (M) est réalisée pour détecter des impuretés de surface (7) sur une surface (6) d'un composant (14) fait de plastique renforcé par des fibres, FRP ; et
où les substances caractéristiques comprennent des composants d'agents de démoulage pour la production de composants FRP.

2. Méthode (M) selon la revendication 1, dans lequel la formation (M5) du résultat de l'évaluation (19) comprend la comparaison du spectre de rayonnement mesuré (17) avec un ou plusieurs spectres de référence (18', 18") de surfaces nettoyées (6') et/ou de surfaces contaminées définies (6").

3. Méthode (M) selon l'une des revendications ci-dessus, dans laquelle la formation (M5) du résultat d'évaluation (19) comprend la comparaison du spectre de rayonnement mesuré (17) avec des courbes d'étalonnage obtenues à partir de l'analyse par fluorescence de rayons X d'échantillons de matériaux.

4. Méthode (M) selon l'une des revendications ci-dessus, dans laquelle la formation (M5) du résultat d'évaluation (19) comprend une analyse univariée des hauteurs de pic, des largeurs de pic et/ou des surfaces de pic des intensités de rayonnement du spectre de rayonnement mesuré (17), qui sont affectés a la caractéristique des substances.

5. Méthode (M) selon l'une des revendications ci-dessus, dans laquelle la méthode chimiométrique comprend une analyse en composantes principales et/ou une analyse Partial-Least-Squares.

6. Méthode (M) selon l'une des revendications ci-dessus, dans laquelle le FRP est un plastique renforcé par des fibres de carbone, CFRP.

7. Méthode (M) selon l'une des revendications ci-dessus, dans laquelle les substances caractéristiques comprennent du silicium, des fluorocarbures et/ou des hydrocarbures.

8. Méthode (M) selon l'une des revendications ci-dessus, dans lequel le spectroscope manuel (10) comprend en outre une fenêtre de rayonnement (5) transmettant le rayonnement, un espace de mesure (20) adjacent à la fenêtre de rayonnement (5) et définissant un volume contrôlé, et une moyens de rinçage au gaz (9) reliée à chambre de mesure (20) ; et
dans lequel le méthode (M) comprend en outre le rinçage (M1) de la chambre de mesure (20) avec un gaz de fonctionnement par l'intermédiaire des moyens de rinçage au gaz (9).

9. Méthode (M) selon l'une des revendications ci-dessus, dans lequel le spectroscope portatif (10) comprend en outre une interface de données (12) ; et
la méthode (M) comprenant en outre l'étape consistant à transmettre (M7) le spectre de rayonnement mesuré (17) et/ou le résultat de l'évaluation (19) via l'interface de données (12) à un dispositif de traitement de données externe (21).
